# EUROPÄISCHE PATENTSCHRIFT

(11) **EP 2 993 127 B1**
(45) Veröffentlichungstag und Bekanntmachung des Hinweises auf die Patenterteilung: **14.06.2017**
(21) Anmeldenummer: 15183962.8
(22) Anmeldetag: 04.09.2015
(51) Int. Cl.: B64C 3/38, B64C 23/06

(54) **LUFTFAHRZEUG MIT C-FÖRMIGEN TRAGFLÄCHEN UND BEWEGBAREN TOPFLÄCHEN**
AIRCRAFT WITH C-SHAPED WINGS AND MOVABLE TOP SURFACES
AERONEF AYANT DES AILES EN FORME DE C ET DES FACES SUPERIEURES MOBILES

(30) Priorität: 05.09.2014 DE 102014112827
(43) Veröffentlichungstag der Anmeldung: 09.03.2016
(73) Patentinhaber: Airbus Defence and Space GmbH, 85521 Ottobrunn (DE)
(72) Erfinder: Seywald, Klaus, 80801 München (DE); Wildschek, Andreas, 85521 Riemerling (DE)
(74) Vertreter: Isarpatent

(56) Entgegenhaltungen:
- WO-A1-93/10000
- DE-A1-102008 022 452
- US-A- 2 194 596
- US-A- 3 231 038
- US-A1- 2011 206 528
- US-B1- 7 644 892
- US-B1- 8 657 226
- US-S- D 363 696
- Ulrich Kling ET AL: "AEROELASTIC INVESTIGATIONS OF A SELF-TRIMMING NON-PLANAR WING", 62. Deutscher Luft- und Raumfahrtkongress 2013, 10. September 2013 (2013-09-10), XP055241790, Stuttgart Gefunden im Internet: URL:http://www.dglr.de/publikationen/2014/ 301274.pdf [gefunden am 2016-01-15]

## Beschreibung

Die Erfindung betrifft ein Luftfahrzeug mit C-förmigen Tragflächen, jeweils umfassend eine untere Haupttragfläche, eine an deren Ende nach oben sich erstreckende Winglet-Fläche, an deren Ende eine sich nach innen erstreckende Topfläche befestigt ist, wobei jeweils eine in Richtung der Spannweite verlaufende Drehachse der Topflächen im aerodynamischen Zentrum der Topfläche angeordnet ist, dass und ferner jede Topfläche mittels einer Verstelleinrichtung um diese Drehachse verstellbar verschwenkbar ist.

Ein Luftfahrzeug mit schwenkbaren Hilfsflügelabschnitten ist aus der DE 10 2008 022 452 A1 bekannt, bei der die Topflächen unabhängig von den anderen Verstellflächen angesteuert werden. Aus der US 7 644 892 B1 ist ein Luftfahrzeug mit starren Topflächen bekannt. Aus der US 8 657 226 B1 sind verschiedene Luftfahrzeug mit starren Topflächen bekannt, die beidendig an Strukturbauteilen des Luftfahrzeugs befestigt sind. Aus der US 2011/0 206 528 A1 ist ein Luftfahrzeug mit Winglets mit Steuerflächen bekannt.
Ein ähnliches Luftfahrzeug ist aus der US 363 696 S bekannt. Dabei sind die Topflächen starr an den Winglets angebracht. Derartige Tragflächen weisen einen verminderten induzierten Widerstand auf, insbesondere wenn die Topflächen einen geringen Abtrieb erzeugen. Nachteilig dabei ist, dass der induzierte Widerstand abhängig ist vom Flugzustand (Steigflug, Reiseflug, Sinkflug, Schwerpunkt, Gewicht, Gewichtsverteilung).
Es ist ferner aus der Druckschrift "Aeroelastic investigations of a self-trimming non-planar wing" von Ulrich Kling et.al. von 2013 bekannt, die Topflächen von C-förmigen Tragflächen um eine Querachse verschwenkbar auszubilden, um diese als Trimmflächen zu verwenden und damit die Längsfluglage zu stablilisieren bzw. zu halten und andere Trimmflächen, wie Höhen- oder V-Leitwerke zu verkleinern oder ganz wegzulassen.

US7644892 zeigt ein Luftfahrzeug gemäss des Oberbegriffs des Anspruchs 1.

Hiervon ausgehend liegt der Erfindung die Aufgabe zugrunde, ein Luftfahrzeug gemäß dem Oberbegriff von Anspruch 1 bereitzustellen, bei der auch bei einer Veränderung des Flugzustandes der induzierte Widerstand minimiert wird.

Erfindungsgemäß wird diese Aufgabe dadurch gelöst, die beiden Verstelleinrichtungen von einer Kontrolleinrichtung gleichartig ansteuerbar sind und wobei auf der Grundlage von Flugzustandsparametern ein für einen minimalen induzierten Widerstand optimaler Anstellwinkel der Topflächen einstellbar ist.

Das aerodynamische Zentrum eines Profils (oder Neutralpunkt) ist der Festpunkt mit konstantem Drehpunkt im Bereich mäßiger Anstellwinkel. Er liegt ungefähr auf der Profilsehne in 25 % der Profiltiefe. In der Praxis kann im Rahmen der Erfindung die Drehachse um +/- 2% (bezogen auf die Profilsehne der Topfläche) vom aerodynamischen Zentrum abweichen.

Durch die Anordnung der Drehachsen der Topflächen im aerodynamischen Zentrum der jeweiligen Topfläche wird das Stellmoment bei der Verstellung der Topfläche minimiert und ist unabhängig von dem Anstellwinkel der Topfläche. Damit lassen sich die Verstelleinrichtungen kompakt ausbilden, was zu minimalen Lasten und einem gerinstmöglichen Gewicht der Lagerung führt. Durch die gemeinsame Einstellung der beiden Topflächen durch eine gemeinsame Kontrolleinrichtung auf der Grundlage erfasster Flugzustandsparameter kann für jeden in Betracht kommenden Flugzustand der für einen minimalen induzierten Widerstand optimale Anstellwinkel der beiden Topflächen eingestellt werden.

Der optimale Anstellwinkel wird vorher durch Berechnungen und/oder Versuche auf der Grundlage der Flugzustandsparameter aufgrund komplexer Berechnungen bestimmt und in einer Software-basierten Tabelle abgelegt. Flugzustandsparameter sind insbesondere Fluggeschwindigkeit, Fluglage, Anstellwinkel, Schwerpunkt, Klappenstellung.

Gemäß einer vorteilhaften Weiterbildung der Erfindung ist die Verstelleinrichtung als redundant wirkender doppelter Spindeltrieb ausgebildet. Auf diese Weise wird auch bei Ausfall eines Spindeltriebes die Funktionalität der Vorrichtung sichergestellt, wodurch Zertifizierungen wie beispielsweise nach EASA CS-25, erreicht werden. Ein Spindeltrieb ist normalerweise relativ langsam, lässt sich aber baulich einfach ausbilden.

Gemäß einer vorteilhaften Weiterbildung der Erfindung ist die Verstelleinrichtung hydraulisch ausgebildet. Diese Ausbildung ermöglicht eine sehr kompakte Bauweise und eine schnelle Bewegbarkeit der Topflächen.

Gemäß einer vorteilhaften Weiterbildung der Erfindung ist jede Verstelleinrichtung aus einer Kombination eines Spindeltriebes für langsame Verstellbewegungen und eines Hydraulikzylinders für schnelle Verstellbewegungen ausgebildet. Dabei ist vorzugsweise die Steuereinrichtung ausgebildet, die beiden Verstelleinrichtungen individuell anzusteuern, wobei zusätzliche Stellsignale für die beiden Topflächen zur Steuerung des Luftfahrzeugs eingebbar sind. Diese Ausbildung ermöglicht es, die Topflächen zusätzlich zur Minimierung des induzierten Widerstands als Steuerflächen zu verwenden und damit die Möglichkeit zu schaffen, die normalerweise vorhandenen Steuerflächen zu verkleinern oder ganz weg zu lassen.

Dabei ist vorzugsweise die Kontrolleinrichtung derart ausgebildet, zur Widerstandsminimierung Stellsignale für eine bestimmte Neigung der Topflächen an die Spindeltriebe auszugeben und Stellsignale zur Steuerung an die Hydraulikzylinder auszugeben. Die Spindeltriebe bewirken dann die nur gleichartige Anpassung des Neigungswinkels der Topflächen, während die Hydraulikzylinder gleich oder entgegengesetzt zueinander die Steuerung des Luftfahrzeugs bewirken.

Eine alternative Ausbildung sieht vor, dass entlang mindestens eines Teils der Vorder- oder Hinterkanten der Topflächen mindestens eine zusätzliche bewegbare /Steuerfläche angeordnet ist. Diese Ausbildung ermöglicht, wie die oben beschriebene, die gleichzeitige Nutzung der Topflächen zur Widerstandsminimierung und als Steuermöglichkeit, wobei die Neigung der Topflächen an sich der Widerstandsminimierung dient, während die mindestens eine Steuerfläche der Steuerung des Luftfahrzeugs dient. Es können bei Bedarf auch mehrere Steuerflächen nebeneinander angeordnet sein, bzw. diese können sich über die gesamte Länge der Topfläche oder nur entlang eines Teils davon erstecken.

Gemäß einer vorteilhaften Weiterbildung der Erfindung beträgt der Schwenkbereich der Topfläche -15° bis + 10°. Besonders bevorzugt ist ein Schwenkbereich von -10° bis +5°

Weitere Vorteile, Merkmale und Einzelheiten ergeben sich aus der nachfolgenden Beschreibung, in der unter Bezug auf die Zeichnung zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1: eine schematische Ansicht eines Luftfahrzeugs mit C-förmigen Tragflächen von vorne;
- Figur 2:: eine schmatische Draufsicht auf eine C-förmige Tragfläche;
- Figur 3:: eine schematische Seitenansicht einer C-förmigen Tragfläche;
- Figur 4:: ein Blockschaltbild der Komponenten.

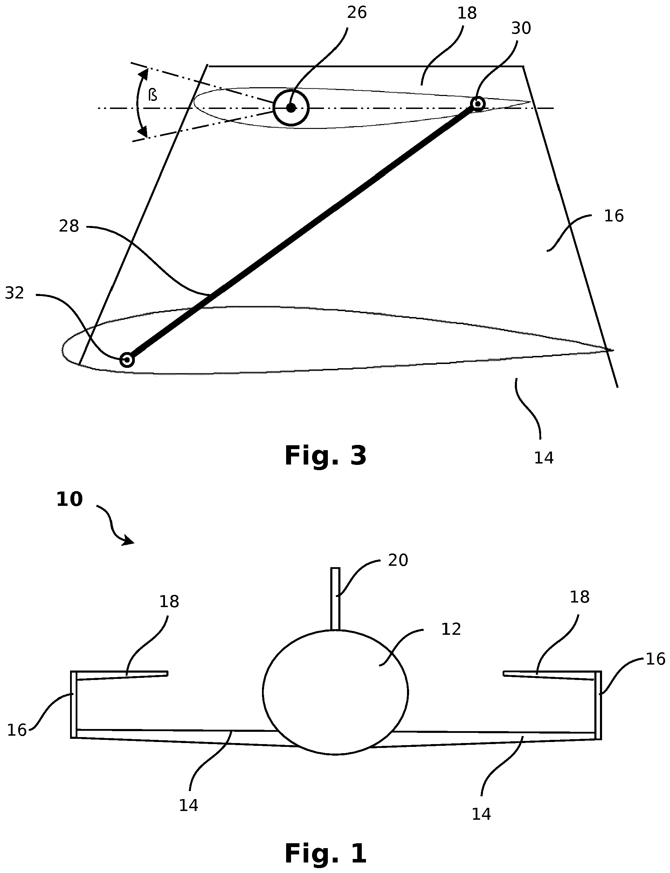

In Figur 1 ist eine schematische Ansicht eines Luftfahrzeugs 10 mit einem Rumpf 12 sowie C-förmigen Haupt-Tragflächen 14 von vorne abgebildet, an deren Enden im Wesentlichen vertikal nach oben orientierte Winglets 16 angeordnet sind, an deren oberen Enden wiederum jeweils nach innen zum Rumpf 12 hin sich erstreckende Topflächen 18 angeordnet sind. Ferner ist ein Seitenleitwerk 20 dargestellt. Alle Flächen 14, 16, 18, 20 sind rein schematisch horizontal bzw. vertikal dargestellt. Tatsächlich können die Haupt-Tragflächen 14 und die Topflächen 18 gegenüber der Horizontalen eine Neigung von einigen Grad aufweisen. Auch müssen die Winglets 16 nicht zwingend vertikal verlaufen, sondern können gegenüber der Vertikalen geneigt sein. Es muss nicht zwangsweise ein Knick zwischen Flügel und Winglet bzw. Winglet und Topfläche sein, der Übergang kann auch gerundet verlaufen.

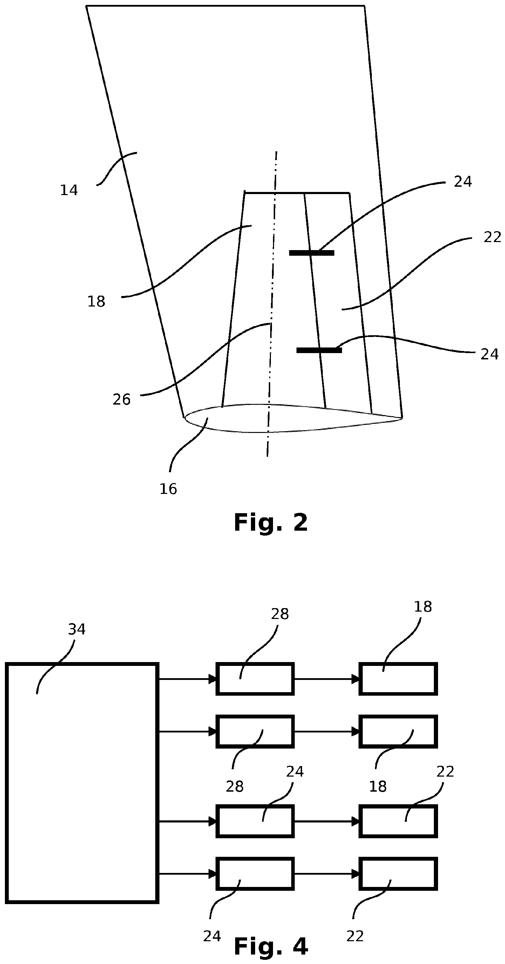

In Figur 2 ist eine Haupt-Tragfläche 14 von oben mit einem Winglet 16 und einer Topfläche 18 dargestellt, deren Hinterkante eine Steuerfläche/ 22 aufweist. Diese Steuerfläche 22 wird mittels zwei schematisch dargestellten Klappen-Verstelleinrichtungen 24 verstellt.

Wie in Figur 3 dargestellt, erzeugt die Topfläche 18 zur Minimierung des induzierten Widerstandes Abtrieb, wirkt also zu einem geringen Grade (wenige Prozent) dem durch die Haupt-Tragflächen 14 erzeugten Auftrieb entgegen.

Die Topfläche 18 ist um eine Drehachse 26 verschwenkbar, vorzugsweise mit einem Schwenkbereich β von -15° bis + 10° (Figur 3). Die Drehachse 26 liegt im aerodynamischen Zentrum der Topfläche, also etwa bei 25% der Profilsehne von vorne gesehen.

Die Topfläche 18 wird mittels einer Verstelleinrichtung 28 betätigt, die vorzugsweise im hinteren Bereich an der Topfläche 18 und im Bereich der Haupt-Tragfläche 14 an einer oberen Anlenkstelle 30 angelenkt ist. Vorzugsweise ist eine untere Anlenkstelle 32 der Verstelleinrichtung 28 im vorderen Bereich des Winglets 16 bzw. der Haupt-Tragfläche 14 angeordnet, damit der Schwerpunkt der Verstelleinrichtung 28 nach vorn gelegt wird. Um eine bessere Kraftübertragung zu erreichen, kann die Verstelleinrichtung 28 alternativ auch weitgehend vertikal ausgerichtet sein, so dass die untere Anlenkstelle 32 der Verstelleinrichtung 28 näherungsweise unter der oberen Anlenkstelle 30 liegt. Die Anbindung der Verstelleinrichtung 28 an die Topfläche 18 kann entweder durch einen bogenartigen Schlitz im Winglet 16 erfolgen (der durch Blenden abgedeckt wird) oder durch einen sich im Inneren des Winglets 16 zwischen den beiden (nicht dargestellten) Lagerstellen der Drehachse 26 angeordneten Hebelarm.

Die Verstelleinrichtung 28 ist vorzugsweise als redundant wirkender doppelter Spindeltrieb ausgebildet, so dass bei Ausfall einer Vorrichtung der zweite Spindeltrieb die Verstellung ausführen kann. Alternativ kann die Verstelleinrichtung 28 auch anders ausgebildet sein, insbesondere zur schnellen Verstellung als Hydraulikeinrichtung. In einem solchen Fall wären vorzugsweise mindestens zwei parallel angeordnete Hydraulikzylinder vorgesehen, die entweder hintereinander oder nebeneinander angeordnet werden.

Alternativ zu der in Figur 2 dargestellten einen Steuerfläche können auch mehrere Steuerflächen nebeneinander angeordnet sein.

Figur 4 zeigt ein Blockschaltbild der Komponenten, bestehend aus einer Kontrolleinrichtung 34, welche die zwei Verstelleinrichtungen 28 für die beiden Topflächen 18 ansteuert. Die Kontrolleinrichtung 34 umfasst mehrere nicht dargestellte Eingänge für Flugzustandsparameter, eine Berechnungseinheit, in der anhand der Flugzustandsparameter auf der Grundlage gespeicherter Rechenalgorithmen und/oder Tabellen ein Anstellwinkel für die beiden Topflächen 18 bestimmt wird, der an die zwei Verstelleinrichtungen 28 ausgegeben wird. Diese wiederum stellen die beiden Topflächen 18 auf den berechneten Anstellwinkel β ein.

Für die in Figur 2 dargestellte Ausführungsform mit zusätzlichen Steuerflächen 22 werden von der Kontrolleinrichtung 34 die Klappen-Verstelleinrichtungen 24 entsprechend angesteuert, insbesonders um Nick- oder Rollbewegungen des Luftfahrzeugs 10 zu bewirken.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

10 Luftfahrzeug
12 Rumpf
14 Haupt-Tragflächen
16 Winglets
18 Topflächen
20 Seitenruder
22 Steuerfläche
24 Klappen-Verstelleinrichtungen
26 Drehachse
28 Verstelleinrichtung
30 obere Anlenkstelle
32 untere Anlenkstelle
34 Kontrolleinrichtung

## Patentansprüche

1. Luftfahrzeug (10) mit C-förmigen Tragflächen, jeweils umfassend eine untere Haupt-Tragfläche (14), eine an deren Ende nach oben sich erstreckende Winglet-Fläche (16), an deren Ende eine nach innen sich erstreckende Topfläche (18) befestigt ist, **dadurch gekennzeichnet, dass** dieTopfläche verschwenkbar ist, und jeweils eine in Richtung der Spannweite verlaufende Drehachse der Topflächen (18) im aerodynamischen Zentrum der Topfläche (18) angeordnet ist und ferner jede Topfläche (18) mittels einer Verstelleinrichtung (24) um diese Drehachse verschwenkbar ist, wobei die beiden Verstelleinrichtungen (24) von einer Kontrolleinrichtung (34) gleichartig ansteuerbar sind und wobei auf der Grundlage von Flugzustandsparametern ein für einen minimalen induzierten Widerstand optimaler Anstellwinkel der Topflächen (18) einstellbar ist.

2. Luftfahrzeug (10) nach Anspruch 1, **dadurch gekennzeichnet, dass** die Verstelleinrichtung (24) als redundant wirkender doppelter Spindeltrieb ausgebildet ist.

3. Luftfahrzeug (10) nach Anspruch 1, **dadurch gekennzeichnet, dass** die Verstelleinrichtung (24) hydraulisch ausgebildet ist.

4. Luftfahrzeug (10) nach Anspruch 1, **dadurch gekennzeichnet, dass** jede Verstelleinrichtung (24) aus einer Kombination eines Spindeltriebes für langsame Verstellbewegungen und eines Hydraulikzylinders für schnelle Verstellbewegungen ausgebildet ist.

5. Luftfahrzeug (10) nach Anspruch 4, **dadurch gekennzeichnet, dass** die Kontrolleinrichtung (34) ausgebildet ist, die beiden Verstelleinrichtungen (24) individuell anzusteuern und zusätzliche Stellsignale für die beiden Topflächen (18) zur Steuerung des Luftfahrzeugs eingebbar sind.

6. Luftfahrzeug (10) nach Anspruch 5, **dadurch gekennzeichnet, dass** die Kontrolleinrichtung (34) ausgebildet ist, zur Widerstandsminimierung Stellsignale für eine bestimmte Neigung der Topflächen (18) an die Spindeltriebe auszugeben und Stellsignale zur Steuerung an die Hydraulikzylinder auszugeben.

7. Luftfahrzeug (10) nach Anspruch 1, **dadurch gekennzeichnet, dass** entlang mindestens eines Teils der Vorder- oder Hinterkanten der Topflächen (18) mindestens eine zusätzliche bewegbare Steuerfläche angeordnet ist.

8. Luftfahrzeug (10) nach einem der vorherigen Ansprüche, **dadurch gekennzeichnet, dass** der Schwenkbereich der Topfläche (18) -15° bis + 10°, vorzugsweise -10° bis +5° beträgt.

## Claims

1. Aircraft (10) having C-shaped wings, each of them comprising a lower main wing (14), a winglet wing (16) that extends upwards on the end of said lower main wing and a top wing (18) that extends inwards is fastened to said winglet wing, **characterized in that** the top wing can pivot, and in each case an axis of rotation of the top wings (18) that extends in the direction of the wing span is arranged in the aerodynamic centre of the top wing (18) and moreover each top wing (18) can be pivoted about said axis of rotation by means of an adjusting device (24), wherein the two adjusting devices (24) can be controlled in an identical manner by a control device (34) and wherein it is possible on the basis of flight state parameters to set an angle of pitch of the top wings (18) that is optimal for a minimal induced resistance.

2. Aircraft (10) according to Claim 1, **characterized in that** the adjusting device (24) is configured as a redundantly-operating double spindle drive.

3. Aircraft (10) according to Claim 1, **characterized in that** the adjusting device (24) is configured as a hydraulic device.

4. Aircraft (10) according Claim 1, **characterized in that** each adjusting device (24) is embodied from a combination of a spindle drive for slow adjusting movements and a hydraulic cylinder for rapid adjusting movements.

5. Aircraft (10) according to Claim 4, **characterized in that** the control device (34) is configured to control the two adjusting devices (24) individually and additional adjusting signals for the two top wings (18) can be input so as to control the aircraft.

6. Aircraft (10) according to Claim 5, **characterized in that** the control device (34) is configured to output adjusting signals to the spindle drive for a specific pitch of the top wings (18) so as to minimise resistance and to output adjusting signals for control purposes to the hydraulic cylinder.

7. Aircraft (10) according to Claim 1, **characterized in that** at least one additional movable control surface is arranged along at least a part of the front edges or rear edges of the top wings (18).

8. Aircraft (10) according to any one of the preceding claims, **characterized in that** the pivot range of the top wing (18) is -15° to +10°, preferably -10° to +5°.

## Revendications

1. Aéronef (10) comportant des voilures en forme de C comprenant chacune une voilure principale inférieure (14), une surface d'ailette (16) s'étendant vers le haut à l'extrémité de celle-ci, à l'extrémité de laquelle est fixée une surface supérieure (18) s'étendant vers l'intérieur, **caractérisé en ce que** la surface supérieure est pivotante, et **en ce que** respectivement un axe de rotation des surfaces supérieures (18), s'étendant en direction de l'envergure, est disposé dans le centre aérodynamique de la surface supérieure (18) et, en outre, **en ce que** chaque surface supérieure (18) est pivotante autour de cet axe de rotation au moyen d'un moyen de réglage (24), dans lequel les moyens de réglage (24) sont commandables de manière identique par un moyen de contrôle (34) et dans lequel, sur la base de paramètres d'état de vol, un angle de réglage des surfaces supérieures (18), optimal pour une résistance induite minimale, est réglable.

2. Aéronef (10) selon la revendication 1, **caractérisé en ce que** le moyen de réglage (24) est réalisé comme entraînement à vis double agissant de manière redondante.

3. Aéronef (10) selon la revendication 1, **caractérisé en ce que** le moyen de réglage (24) est réalisé de manière hydraulique.

4. Aéronef (10) selon la revendication 1, **caractérisé en ce que** chaque moyen de réglage (24) est réalisé à partir d'une combinaison d'un entraînement à vis pour des mouvements de réglage lents et d'un vérin hydraulique pour des mouvements de réglage rapides.

5. Aéronef (10) selon la revendication 4, **caractérisé en ce que** le moyen de contrôle (34) est réalisé pour commander les deux moyens de réglage (24) individuellement et **en ce que** des signaux de réglage supplémentaires pour les deux surfaces supérieures (18) peuvent être entrés pour la commande de l'aéronef.

6. Aéronef (10) selon la revendication 5, **caractérisé en ce que** le moyen de contrôle (34) est réalisé, dans le but de minimiser la résistance, pour fournir aux entraînements à vis des signaux de réglage pour une certaine inclinaison des surfaces supérieures (18) et pour fournir aux verins hydrauliques des signaux de réglage pour la commande.

7. Aéronef (10) selon la revendication 1, **caractérisé en ce qu'**au moins une surface de commande supplémentaire déplaçable est disposée le long d'au moins une partie des bords d'attaque ou de fuite des surfaces supérieures (18).

8. Aéronef (10) selon l'une quelconque des revendications précédentes, **caractérisé en ce que** la plage de pivotement de la surface supérieure (18) est de -15° à + 10°, de préférence de -10° à +5°.
